# EUROPÄISCHE PATENTSCHRIFT

(11) **EP 0 416 144 B1**
(45) Veröffentlichungstag und Bekanntmachung des Hinweises auf die Patenterteilung: **18.11.1993**
(21) Anmeldenummer: 89116341.2
(22) Anmeldetag: 05.09.1989
(51) Int. Cl.: B23F 21/02

(54) **Schleifwerkzeug**
Grinding tool
Outil de meulage

(43) Veröffentlichungstag der Anmeldung: 13.03.1991
(73) Patentinhaber: Kapp GmbH & Co. KG Werkzeugmaschinenfabrik, D-96450 Coburg (DE)
(72) Erfinder: Kapp, Bernhard, Dr.-Ing., D-8630 Coburg (DE); Lorenz, Manfred, Dipl.-Ing., D-8630 Coburg (DE)
(74) Vertreter: Stenger, Watzke & Ring Patentanwälte

(56) Entgegenhaltungen:
- CH-A- 571 921
- DE-C- 638 588
- FR-A- 586 797
- GB-A- 2 113 584
- US-A- 1 753 707
- US-A- 1 759 333

## Beschreibung

Die Erfindung betrifft ein Schleifwerkzeug zur Herstellung von Außenprofilen, vorzugsweise von geraden oder schrägen Außenverzahnungen, mit einem stählernen Grundkörper, der parallel zueinander und rechtwinklig zur Drehachse verlaufende Stirnflächen aufweist und dessen die Arbeitsfläche bildende Mantalfläche mit einer gleichmäßigen Schicht eines superharten Werkstoffes, insbesondere aus kubisch kristallinem Bornitrid oder Diamant versehen ist, der unter Verwendung eines Bindemittels, vorzugsweise Nickel, galvanisch auf dem Grundkörper aufgebracht ist.

Bei der Herstellung von Außenprofilen, insbesondere von geraden oder schrägen Außenverzahnungen wird zwischen Weichbearbeitung und Hartbearbeitung unterschieden. Bei der Weichbearbeitung wird das Außenprofil mittels eines Wälzfräsers auf einer Wälzfräsmaschine hergestellt. Oberhalb einer bestimmten Werkstoffhärte ist der Einsatz derartiger Wälzfräser stark eingeschränkt. Hier setzt die Hartbearbeitung mittels Wälzschleifen ein, wobei der Schleifvorgang entweder ein kontinuierliches Wälzschleifen oder ein Teilwälzschleifen sein kann. Der Bewegungsablauf des kontinuierlichen Wälzschleifens auf einer Wälzschleifmaschine entspricht dem Bewegungsablauf des Wälzfräsens; als Werkzeug findet eine Schleifscheibe mit zahnstangenförmigem Bezugsprofil Verwendung. Der ebenfalls auf einer Wälzschleifmaschine durchgefuhrte Bewegungsablauf des Teilwälzschleifens entspricht dem Wälzhobeln; als Werkzeuge werden entweder trapezförmige Doppelkegelschleifscheiben oder geradflankige Tellerschleifscheiben verwendet. Schließlich können gerade oder schräge Außenprofilformen auch durch Formschleifen, beispielsweise auf einer Zahnformschleifmaschine hergestellt werden. In diesem Fall entspricht der Bewegungsablauf dem des Formfräsens mit Scheibenfräsern.

Die zur Weichbearbeitung eingesetzten Wälzfräser bewirken infolge ihrer Spannuten einen unterbrochenen Schnitt, wodurch sich periodische Belastungen von Werkstück, Werkzeug und Werkzeugmaschine ergeben. Diese führen zu Schwingungen, die einerseits die Leistung der Wälzfräsmaschinen begrenzen und sich andererseits ungünstig auf die Lebensdauer des Werkzeuges auswirken.

Der Nachteil des zur Hartbearbeitung eingesetzten Wälzschleifens ist insbesondere darin zu sehen, daß die hierfür verwendeten keramischen Schleifwerkzeuge häufig abgerichtet werden müssen, und zwar entweder innerhalb oder außerhalb der Schleifmaschine. Wegen der Bruchgefahr der keramischen Schleifwerkzeuge ist deren maximale Drehzahl begrenzt. Bei höheren Umfangsgeschwindigkeiten muß der Bearbeitungsraum der Maschine mit großem Aufwand gekapselt werden, um Unfälle durch berstende Werkzeuge zu verhindern. Beim Teilwälzschleifen werden mit den trapezförmigen Doppelkegelschleifscheiben oder Tellerschleifscheiben Werkzeuge verwendet, deren Kontaktfläche mit dem Werkstück relativ klein ist. Neben der Verlustzeit für die erforderlichen Teilvorgänge nimmt auch der eigentliche Schleifvorgang deshalb eine verhältnismäßig lange Zeit in Anspruch.

Aus der DE-A-32 02 695 ist ein Schleifwerkzeug der eingangs beschriebenen Art in Form einer Schleifschnecke bekannt, das die voranstehend geschilderten Nachteile beseitigt und eine unfallsichere Weich- und Hartbearbeitung von mit Außenprofilen zu versehenden Werkstücken auf ein und derselben Maschine mit einer gegenüber den bekannten Verfahren erheblich gesteigerten Leistung ermöglicht. Die Mantelfläche dieses Schleifwerkzeuges wird durch mehrere Windungen einer ein- oder mehrgängig ausgebildeten Schleifschnecke gebildet. Ein entsprechend ausgeführter stählerner Grundkörper wird zu diesem Zweck auf seiner Mantelfläche mit einer gleichmäßigen Schicht eines superharten Werkstoffes, insbesondere aus kubisch kristallinem Bornitrid oder Diamant unter Verwendung eines Bindemittels, vorzugsweise Nickel, galvanisch beschichtet.

Gegenüber dem bekannten Wälzfräsverfahren hat dieses bekannte Schleifwerkzeug den Vorteil, daß die Schleifkristalle des superharten Werkstoffes einen kontinuierlichen Schnitt ergeben, der zusammen mit der aufgrund der hohen Festigkeit des Schleifwerkzeugs gesteigerten Drehzahl einerseits eine erheblich höhere Schneidleistung zur Folge hat und andererseits das Entstehen von Schwingungen vermeidet. Mit dem bekannten Werkzeug kann auch die Bearbeitung hoch fester Materialien durchgeführt werden, so daß auch hochvergütete, hochlegierte und gehärtete Stähle bearbeitet werden können. Das bekannte Schleifwerkzeug kann somit sowohl anstelle teurer Wälzfräser, die ein häufiges Nachschleifen erfordern, als auch anstelle von keramischen Schleifwerkzeugen eingesetzt werden, wobei sowohl Abrichtvorrichtungen und zeitaufwendige Abrichtvorgänge entfallen als auch die bei den keramischen Werkzeugen bestehende Unfallgefahr vermieden wird.

In der Praxis hat sich herausgestellt, daß es Schwierigkeiten bereitet, den stählernen Grundkörper mit exakt einer Lage des superharten Werkstoffes, insbesondere kubisch kristallinem Bornitrid zu beschichten. Beim galvanischen Beschichtungsvorgang schlägt sich die vorzugsweise aus Nickel bestehende Bindeschicht für den superharten Werkstoff bevorzugt an den radial am weitesten außenliegenden Flächen des schneckenförmigen Grundkörpers nieder, so daß entweder im Grund der schneckenförmig verlaufenden Nuten des Schleifwerkzeuges keine oder keine ausreichende Bindewirkung für die Partikel des superharten Werkstoffes, vorzugsweise Bornitridkristalle erzeugt wird oder an den radial außenliegenden Oberflächen mehr als eine Schichtdicke erzeugt wird. Es bereitet somit Schwierigkeiten, eine Beschichtung des schneckenförmigen Grundkörpers mit der für ein derartiges Schleifwerkzeug geforderten höchsten Präzision beim Herstellungsprozeß derartiger Schleifwerkzeuge zu garantieren.

Ausgehend von dem aus der DE-A-32 02 695 Bekannten liegt der Erfindung die Aufgabe zugrunde, ein Schleifwerkzeug zur Herstellung von Außenprofilen mit einem stählernen Grundkörper zu schaffen, dessen Mantelfläche unter normalen Herstellungsbedingungen mit einer gleichmäßigen Schicht eines superharten Werkstoffes unter Verwendung eines Bindemittels galvanisch beschichtet werden kann, ohne daß die Gefahr einer unzureichenden Bindewirkung oder die Ausbildung unterschiedlicher Schichtstärken an verschiedenen Flächen des Werkzeuges besteht.

Die Lösung dieser Aufgabenstellung durch die Erfindung ist dadurch gekennzeichnet,
daß die Mantelfläche die Oberfläche nur einer einzigen vollständigen Windung eines Schneckenganges derart abbildet,
daß sich in einem Radialschnitt der komplette Querschnitt des aus dem jeweiligen Werkstück herauszuschleifenden Profils ergibt,
daß sich in dem auf demselben Durchmesser lieganden, um 180° versetzten Radialschnitt ein Profil aus den beiden einander entgegengesetzt und im Abstand zueinander gegenüberliegenden Hälften des axial aufgeteilten Profils ergibt,
und daß sich in den dazwischenliegenden Radialschnitten die Profilhälften jeweils dem Verlauf des Schneckenganges folgend zunehmend bzw. abnehmend ergänzen.

Der stählerne Grundkörper des erfindungsgemäßen Schleifwerkzeuges wird somit im Gegensatz zu der aus der DE-A-32 02 695 bekannten, mehrere Windungen umfassenden Schleifschnecke durch einen scheibenartigen Abschnitt einer derartigen Schnecke gebildet, der Jedoch nicht dem Verlauf einer vollständigen, der jeweiligen Steigung folgenden Windung entspricht, sondern einem Ausschnitt aus einer derartigen Schnecke zwischen zwei im Abstand der Jeweiligen Steigung verlaufenden, rechtwinklig zur Drehachse verlaufenden Stirnflächen, wobei die Mantelfläche des erfindungsgemäßen Schleifwerkzeuges dennoch die komplette Oberfläche einer Windung eines Schneckenganges umfaßt.

Durch diese erfindungsgemäße Gestaltung ergibt sich der Vorteil, daß unter Beibehaltung sämtlicher Einsatzmöglichkeiten der bekannten Schleifschnecke eine problemlose Beschichtung des stählernen Grundkörpers in einem normalen Herstellungsprozeß möglich ist, weil die Oberfläche des erfindungsgemäßen Schleifwerkzeuges wegen ihrer einfacheren Kontur insgesamt mit einer gleichmäßigen Schicht des superharten Werkstoffes galvanisch beschichtet werden kann. Die Mantelfläche ist über den gesamten Umfang des erfindungsgemäßen Schleifwerkzeuges gut zugänglich, so daß der stählerne Grundkörper nicht nur problemlos hergestellt, sondern ebenso problemlos mit einer definierten Schicht aus superhartem Werkstoff und Bindemittel galvanisch beschichtet werden kann. Sofern das erfindungsgemäße Schleifwerkzeug zur Herstellung von geraden oder schrägen Außenverzahnungen eingesetzt wird, lassen sich aus diesem Grunde auch auf einfache Weise notwenige Zahnprofilkorrekturen realisieren.

Es hat sich darüber hinaus überraschend herausgestellt, daß das erfindungsgemäße Schleifwerkzeug gegenüber der aus der DE-A-32 02 695 bekannten Schleifschnecke eine erheblich geringere Leistungsaufnahme hat und sich wesentlich weniger stark erwärmt. Die Ursache hierfür liegt darin, daß bei der erfindungsgemäßen Ausbildung des Schleifwerkzeuges eine Art hydro-dynamischer Pumpeffekt vermieden wird, der bei der aus mehreren Windungen bestehenden bekannten Schleifschnecke dazu führt, daß das beim Schleifvorgang verwendete Kühl- und Schmiermittel einem Pumpvorgang in axialer Richtung unterworfen wird. Die erfindungsgemäße Ausgestaltung des Schleifwerkzeuges hat somit nicht nur Vorteile bei der Herstellung, sondern auch bei der Anwendung. Das erfindungsgemäße Schleifwerkzeug wird nach jedem Werkstückdurchgang um bis zu einer Teilung axial verschoben, um die notwendige Überdeckung der Eingriffsfläche zu erzielen. Diese axiale Bewegung geschieht zweckmäßig durch Verschieben der Schleifwelle mit dem auf ihr befestigten Schleifwerkzeug.

Um die Schleifleistung des erfindungsgemäßen Schleifwerkzeuges zu erhöhen, können in Weiterbildung der Erfindung mindestens zwei identische scheibenartige Schleifwerkzeuge im Abstand mindestens einer der jeweiligen Steigung der auf ihrer Mantelfläche abgebildeten Windung entsprechenden Teilung auf einer gemeinsamen Schleifwelle angeordnet sein. Selbstverständlich ist es auch möglich, ein derartiges Schleifwerkzeug mit zwei im Abstand voneinander angeordneten Schleifflächen einstückig aus einem gemeinsamen Grundkörper herzustellen.

Auf der Zeichnung sind zwei Ausführungsbeispiele eines erfindungsgemäßen Schleifwerkzeuges dargestellt, und zwar zeigen:
- Fig. 1: eine perspektivische Darstellung einer ersten Ausführungsform einer auf einer Schleifspindel befestigten Schleifscheibe zur Herstellung einer schrägen Außenverzahnung,
- Fig. 2: eine Stirnansicht der Schleifscheibe nach Fig. 1,
- Fig. 3: einen schematischen Querschnitt durch die Schleifscheibe nach den Fig. 1 und 2,
- Fig. 4: insgesamt acht schematische Teilschnitte durch den Grundkörper der Schleifscheibe nach Fig. 3,
- Fig. 5: einen vergrößert gezeichneten Teilschnitt durch die Schleifscheibe,
- Fig. 6: ein zweites Ausführungsbeispiel eines aus zwei Schleifscheiben bestehenden Schleifwerkzeuges zur Herstellung einer schrägen Außenverzahnung und
- Fig. 7: eine Ansicht des Schleifwerkzeuges nach Fig. 6.

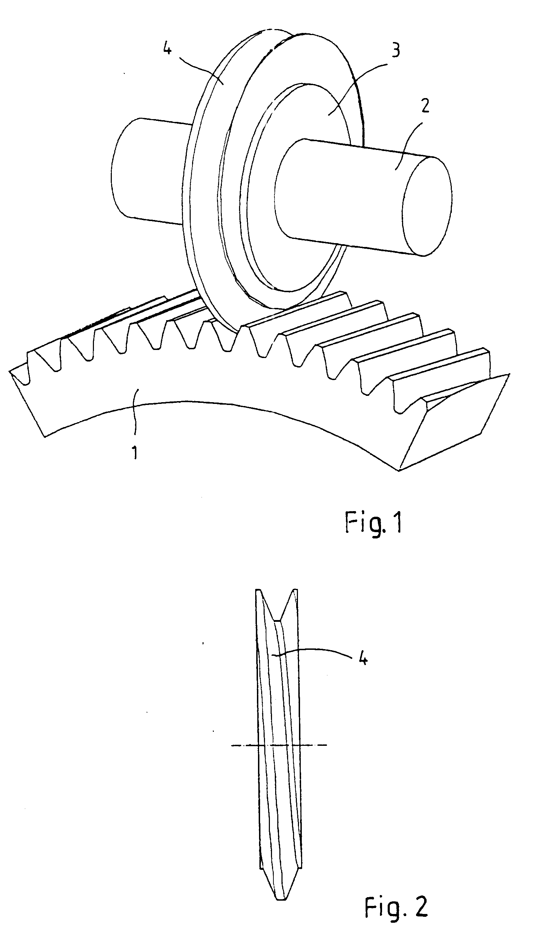

Das erste Ausführungsbeispiel nach den Fig. 1 und 2 zeigt ein Schleifwerkzeug zur Herstellung von Außenprofilen, nämlich einer schrägen Außenverzahnung eines Zahnkranzes 1, von dem ein Ausschnitt in Fig. 1 zu erkennen ist. Zur Endbearbeitung dieser Außenverzahnung wird eine auf einer Schleifspindel 2 zwischen zwei Lagerscheiben 3 befestigte Schleifscheibe 4 verwendet, die aus einem stählernen Grundkörper besteht, dessen Mantelfläche mit einer gleichmäßigen Schicht eines superharten Werkstoffes versehen ist. Dieser superharte Werkstoff, insbesondere kubisch kristallines Bornitrid, wird unter Verwendung eines Bindemittels, vorzugsweise Nickel, galvanisch auf den stählernen Grundkörper aufgebracht.

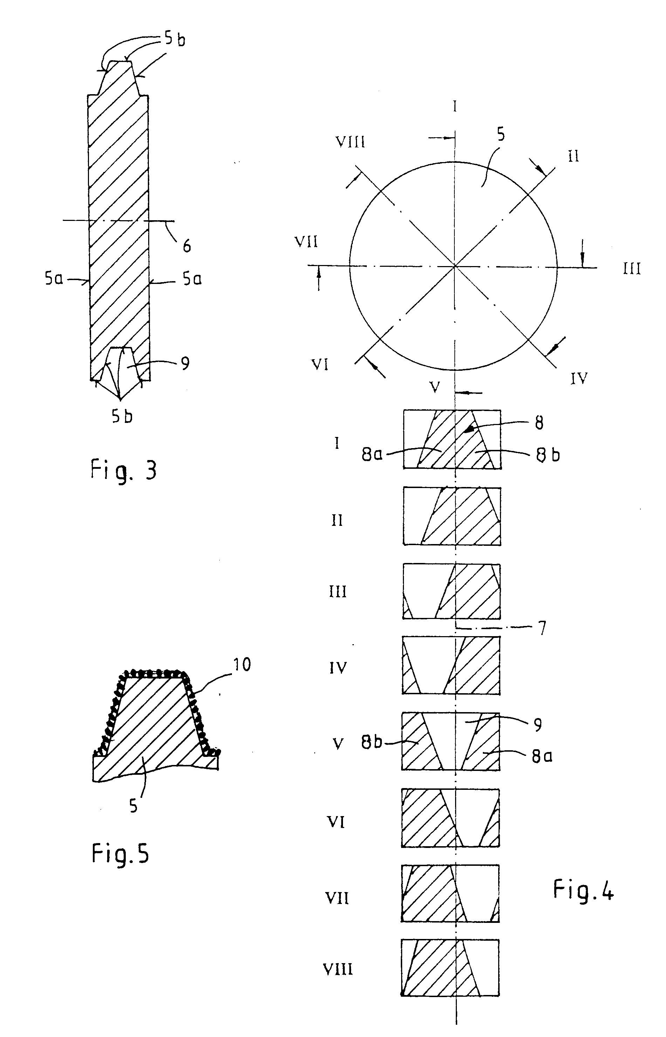

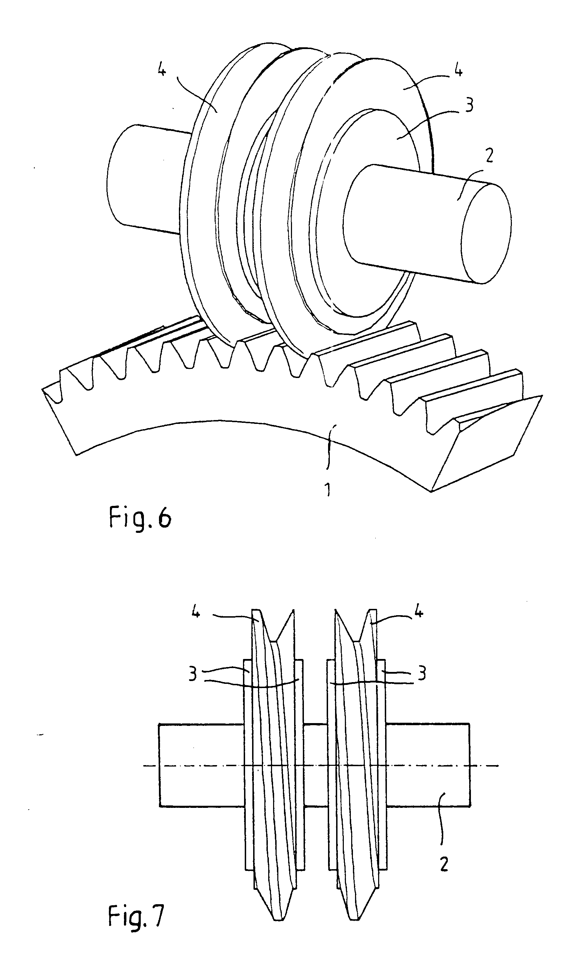

Wie insbesondere die schematische Darstellung in den Fig. 3 und 4 erkennen läßt, ist der Grundkörper 5 als Scheibe mit parallel zueinander und rechtwinklig zur Drehachse 6 verlaufenden Stirnflächen 5a ausgebildet. Die mit dem superharten Werkstoff zu beschichtende Mantelfläche 5b, d.h. die gesamte zur Durchführung des Schleifvorganges dienende Oberfläche des Umfanges des scheibenförmigen Grundkörpers 5 bildet insgesamt die Oberfläche einer vollständigen Windung eines Schneckenganges ab. Dies ergibt sich am besten aus Fig. 4, die insgesamt acht Radialschnitte durch die Mantelfläche 5b des Grundkörpers 5 zeigt, deren Lage und gegenseitige Zuordnung aus der oberen Darstellung in Fig. 4 zu erkennen ist.

Die Schnittdarstellung I in Fig. 4 zeigt, daß sich in diesem Radialschnitt I der komplette Querschnitt desjenigen Profils ergibt, das aus dem jeweiligen Werkstück herauszuschleifen ist. Ein Vergleich des Radialschnittes I in Fig. 4 mit der Darstellung der schrägen Außenverzahnung des Zahnkranzes 1 in Fig. 1 zeigt, daß der komplette Querschnitt einer Zahnlücke im Radialschnitt I abgebildet ist. Dieses symmetrisch zu einer Symmetrielinie 7 liegende Profil ist insgesamt mit der Bezugsziffer 8 bezeichnet. Es besteht aus zwei rechts bzw. links der Symmetrielinie 7 angeordneten Profilhälften 8a und 8b.

Das auf demselben Durchmesser des Grundkörpers 5 liegende, gegenüber dem Radialschnitt I um 180° versetzte Profil ist im Radialschnitt V dargestellt. Dieses besteht aus den beiden Profilhälften 8a und 8b, die entgegengesetzt zu ihrer Lage im Radialschnitt I und im Abstand zueinander angeordnet sind, so daß sich zwischen den beiden Profilhälften 8a und 8b eine Vertiefung 9 bildet, die auch im Querschnitt der Fig. 3 zu erkennen ist. In den zwischen den Radialschnitten I und V liegenden Radialschnitten II,III und IV bzw. VI,VII und VIII ergänzen sich die beiden Profilhälften 8a und 8b entsprechend dem Verlauf des Schneckenganges entweder zunehmend bzw. abnehmend. Insgesamt ergibt sich somit ein wendelförmiger Verlauf sowohl der schrägstehenden Flanken des Profils 8 als auch der V-förmigen Vertiefung 9 über den Verlauf einer kompletten Windung. Obwohl die Mantelfläche 5b des Grundkörpers 5 nicht der Steigung dieser Windung eines Schneckenganges folgt, ist somit die gesamte Oberfläche einer vollständigen Windung eines Schneckenganges auf der Mantelfläche 5b des Grundkörpers 5 abgebildet.

Der in Fig. 5 vergrößert dargestellte Teilschnitt zeigt, daß die Mantelfläche des Grundkörpers 5 mit einer gleichmäßigen Schicht 10 eines superharten Werkstoffes versehen ist, der unter Verwendung eines Bindemittels galvanisch aufgebracht worden ist. Die dunklen Partikel stellen die einzelnen Kristalle dar, die in das heller gezeichnete Bindemittel eingebettet sind.

Um die in Fig. 1 erkennbare Außenverzahnung mit der in den Fig. 1 und 2 dargestellten Schleifscheibe 4 herstellen zu können, ist es erforderlich, die mit der Schleifscheibe 4 bestückte Schleifspindel 2 nach jedem Werkstückdurchgang axial zu verschieben, um eine vollständige Überdeckung der Eingriffsflächen zu erhalten. Diese Verschiebung erfolgt um einen Betrag, der maximal einer Teilung der Verzahnung entspricht.

Beim zweiten Ausführungsbeispiel nach den Fig. 6 und 7 ist dargestellt, daß auf derselben Schleifspindel 2 auch zwei identische Schleifscheiben 4 im Abstand voneinander angeordnet sein können, um die Schleifleistung zu erhöhen. Der Abstand der beiden Schleifscheiben 4 entspricht hierbei einer Teilung des herzustellenden Profils, d.h. gleichzeitig der jeweiligen Steigung der auf der Mantelfläche der Schleifscheiben 4 abgebildeten Windung. Selbstverständlich kann der Abstand der beiden Schleifscheiben 4 bei der Herstellung von Außenprofilen größerer Abmessungen auch dem Mehrfachen einer Teilung entsprechen.

### Bezugszeichenliste

- 1: Zahnkranz
- 2: Schleifspindel
- 3: Lagerscheibe
- 4: Schleifscheibe
- 5: Grundkörper
- 5a: Stirnfläche
- 5b: Mantelfläche
- 6: Drehachse
- 7: Symmetrielinie
- 8: Profil
- 8a: Profilhälfte
- 8b: Profilhälfte
- 9: Vertiefung
- 10: Schicht
- I-VIII: Radialschnitte

## Patentansprüche

1. Schleifwerkzeug zur Herstellung von Außenprofilen, vorzugsweise von geraden oder schrägen Außenverzahnungen, mit einem stählernen Grundkörper (5), der parallel zueinander und rechtwinklig zur Drehachse (6) verlaufende Stirnflächen (5a) aufweist und dessen die Arbeitsfläche bildende Mantelfläche (5b) mit einer gleichmäßigen Schicht (10) eines superharten Werkstoffes, insbesondere aus kubisch kristallinem Bornitrid oder Diamant versehen ist, der unter Verwendung eines Bindemittels, vorzugsweise Nickel, galvanisch auf dem Grundkörper (5) aufgebracht ist,
**dadurch gekennzeichnet,**
daß die Mantelfläche (5b) die Oberfläche nur einer einzigen vollständigen Windung eines Schneckenganges derart abbildet,
daß sich in einem Radialschnitt (I) der komplette Querschnitt des aus dem jeweiligen Werkstück herauszuschleifenden Profils (8) ergibt,
daß sich in dem auf demselben Durchmesser liegenden, um 180° versetzten Radialschnitt (V) ein Profil aus den beiden einander entgegengesetzt und im Abstand zueinander gegenüberliegendan Hälften (8a,8b) des axial aufgeteilten Profils (8) ergibt,
und daß sich in den dazwischanliegenden Radialschnitten (II,III,IV bzw. VI,VII,VIII) die Profilhälften (8a,8b) jeweils dem Verlauf das Schneckenganges folgend zunehmend bzw. abnehmend ergänzen.

2. Schleifwerkzeug nach Anspruch 1, dadurch gekennzeichnet, daß mindestens zwei identische scheibenartige Schleifwerkzeuge (4) im Abstand mindestens einer der jeweiligen Steigung der auf ihrer Mantelfläche abgebildeten Windung entsprechenden Teilung auf einer gemeinsamen Schleifspindel (2) angeordnet sind.

## Claims

1. Grinding tool for producing external profiles, preferably straight or oblique external toothings, cornprising a steel main body (5) which has faces (5a) extending parallel to one another and at right angles to the axis of rotation (6) and whose peripheral surface (5b) is provided with a uniform coating (10) of a super-hard material, particularly boron nitride of cubic crystal structure or diamond, which is applied by electroplating with the aid of a binder, preferably nickel, to the main body (5),
characterised in that
the peripheral surface (5b) represents the surface of only a single complete turn of a spiral in such a manner that the complete cross-section of the profile (8) to be ground from a given workpiece is obtained in a radial section (I),
in that in the radial section (V) offset by 180° and lying on the same diameter a profile is obtained from the two halves (8a, 8b) of the axially divided profile (8) which lie opposite one another and at a distance from each other,
and in that in the intermediate radial sections (II, III, IV and VI, VII, VIII respectively) lying therebetween the profile halves (8a, 8b) complement one another increasingly and decreasingly respectively in each case, following the path of the spiral.

2. Grinding tool according to Claim 1, characterised in that at least two identical disc-like grinding tools (4) are arranged on a common grinding spindle (2) and spaced apart at least by a pitch corresponding to the lead, in each particular case, of the turn represented on their peripheral surface.

## Revendications

1. Outil de rectification destiné à la fabrication de profils extérieurs, de préférence de dentures extérieures droites ou hélicoïdales, comprenant un corps de base en acier (5) qui comporte des faces frontales (5a) parallèles l'une à l'autre et perpendiculaires à l'axe de rotation (6) et dont la surface périphérique (5b) formant la surface de travail est revêtue d'une couche uniforme (10) d'un matériau superdur, en particulier en nitrure de bore à cristaux cubiques ou en diamant, qui est appliqué sur le corps de base (5) par galvanisation en utilisant un liant, de préférence du nickel, caractérisé en ce que la surface périphérique (5a) correspond à la surface d'un seul enroulement complet d'un filet de vis sans fin, de façon à obtenir, en coupe radiale (I), la section transversale complète du profil que l'on veut réaliser par rectification à partir de la pièce concernée, en ce que, en coupe radiale (V) décalée de 180° et située sur le même diamètre, on obtient un profil constitué des deux moitiés (8a, 8b) du profil (8) divisé axialement, lesdites moitiés (8a, 8b) étant disposées en vis-à-vis l'une de l'autre et distantes l'une de l'autre, et en ce que, dans les coupes radiales intermédiaires (II, III, IV et VI, VII, VIII), les moitiés de profil (8a, 8b) se complètent en augmentant ou en diminuant, en suivant le tracé du filet de vis sans fin.

2. Outil de rectification selon la revendication 1, caractérisé en ce qu'au moins deux outils de rectification identiques (4) en forme de disques sont montés sur une broche porte-meule commune (2), à une distance au moins égale à une division correspondant au pas adopté de l'enroulement formé sur leur surface périphérique.
